# EUROPÄISCHE PATENTSCHRIFT

(11) **EP 1 738 579 B1**
(45) Veröffentlichungstag und Bekanntmachung des Hinweises auf die Patenterteilung: **12.10.2011**
(21) Anmeldenummer: 05716925.2
(22) Anmeldetag: 04.03.2005
(51) Int. Cl.: H04N 5/225

(54) **OPTO-ELEKTRONISCHES MODUL**
OPTOELECTRONIC MODULE
MODULE OPTOELECTRONIQUE

(30) Priorität: 15.04.2004 DE 102004018222
(43) Veröffentlichungstag der Anmeldung: 03.01.2007
(73) Patentinhaber: Robert Bosch GmbH, 70442 Stuttgart (DE)
(72) Erfinder: SCHMID, Roland, 70599 Stuttgart (DE); SCHICK, Jens, 71083 Herrenberg (DE)
(86) Internationale Anmeldenummer: PCT/EP2005/050989
(87) Internationale Veröffentlichungsnummer: WO 2005/101813

(56) Entgegenhaltungen:
- WO-A-03/005455
- WO-A-2005/015897
- US-A- 4 734 778

## Beschreibung

Die Erfindung betrifft ein opto-elektronisches Modul nach dem Oberbegriff des Anspruchs 1. In der Automobilindustrie werden zunehmend fahrzeugfest angeordnete Kameras mit optischen Sensoren eingesetzt, um eine optische Erfassung des Fahrzeugumfelds zu ermöglichen. Die hohen Anforderungen an die Ausrichtung abbildender optischer Elemente in Bezug auf einen lichtempfindlichen Sensor führt in der Regel zur Verwendung von sogenannten Imagermodulen, bei denen die abbildenden optischen Elemente unmittelbar auf dem lichtempfindlichen Sensor befestigt sind. Dadurch ist jedoch die Verarbeitungstemperatur des Imagermoduls begrenzt, wodurch bekannte preiswerte Lötprozesse für die Befestigung derartiger Imagermodule, beispielsweise auf einem elektronische und optische Bauelemente tragenden Trägerelement, nicht einsetzbar sind.

Aus WO 03/005455 A1 ist eine Bilderzeugungsvorrichtung, insbesondere 3D-Kamera, bekannt, mit zumindest einem Bildaufnahmesensor, der auf einer Leiterplatte angeordnet ist. Dabei ist der Bildaufnahmesensor durch eine blanke integrierte Schaltung gebildet, die auf einer Leiterplatte angeordnet ist.

Aus US 4,734,778 A ist eine Bildaufnahmevorrichtung auf Halbleiterbasis bekannt, die ein Gehäuse enthält, das auf einem Okularabschnitt angeordnet ist, sowie einen Bildsensor auf Halbleiterbasis , der in dem Gehäuse untergebracht ist und dessen Bildsensorfläche gegenüber dem optischen System des Okularabschnittes liegt. Der Sensor ist an einer Platte befestigt, die von einem Justierteil getragen wird, so dass sie in einer Richtung parallel zur Sensoroberfläche beweglich ist. Die Platte wird durch das Drehen von Zentrierschrauben bewegt, so dass der Mittelpunkt der Sensoroberfläche in Übereinstimmung mit der Achse des optischen Systems gebracht werden kann. Ein Fokussierteil zur Bewegung entlang der optischen Achse befindet sich ebenfalls in dem Gehäuse. Das Justierteil wird von dem Gehäuse und dem Fokussierteil getragen, so dass sie zusammen entlang der optischen Achse sowie um den Schnittpunkt der Sensoroberfläche mit der optischen Achse beweglich sind. Das Justierteil kann durch Kippschrauben zur Justage des Kippwinkels der Sensoroberfläche relativ zur optischen Achse bewegt werden.

Aus WO 2005/015897 A1, welches zum stand der Technik nach Art. 54(3) EPÜ gehört, ist ein Bildaufnahmesystem, insbesondere zur Verwendung in einem Kraftfahrzeug bekannt. Das Bildaufnahmesystem umfasst einen Bildsensor, eine Optikeinheit, ein Gehäuse und Befestigungsmittel zur Fixierung des Bildsensors relativ zu dem Gehäuse. Das Gehäuse umfasst Mittel zur Aufnahme der Optikeinheit. Dabei weist das Gehäuse innenseitig Ausrichtungsmittel auf, die eine Ausrichtung der Hauptachse des Bildsensors und der Hauptachse der Optikeinheit zueinander ermöglichen. Ein in dem Gehäuse angeordneter optischer Kanal mündet in eine einem Trägerelement zugewandten Auflagefläche, die als Anschlag für ein auf dem Trägerelement angeordnetes optisches Bauelement dient.

### Vorteile der Erfindung

Ausgehend von einem opto-elektrischen Modul nach dem Oberbegriff des Anspruchs 1 ermöglicht die Erfindung mit den Merkmalen des Anspruchs 1 eine allen optischen Erfordernissen entsprechende Montage eines eine abbildende

Optik und einen lichtempfindlichen Sensor umfassenden optischen Moduls ohne unzulässig hohe thermische Belastung durch Lötprozesse oder dergleichen. Dadurch, daß das abbildende optische Element in einem Gehäuse angeordnet und das lichtempfindliche optische Element getrennt mit einem Trägerelement verbunden wird, können beide optischen Elemente optimal vormontiert werden. Bei der anschließenden Montage von Trägerelement und Gehäuse ist eine einfache und zuverlässige Ausrichtung der optischen Achsen der optischen Elemente dadurch erleichtert, daß das mit dem Trägerelement verbundene optische Element an einer Auflagefläche an dem Gehäuse zum Anschlag kommt, während das Trägerelement für Justierzwecke noch in einer x-, y-Ebene drehbar und verschiebbar bleibt. Dadurch daß das mit dem Trägerelement verbundene optische Element nur lose an der Auflagefläche anliegt aber nicht fest mit dem Gehäuse verbunden ist, kann weiterhin eine zu große mechanische Belastung der Lötstellen de mit dem Trägerelement vorzugsweise verlöteten optischen Elements unterbunden werden. Dies ist aber für eine lange Lebensdauer des optisch-elektronischen Moduls vorteilhaft. Trotz der stabilen und langlebigen Konstruktion läßt sich das optisch-elektronische Modul preiswert fertigen, was wiederum einem Großserieneinsatz zugute kommt. Da das abbildende optische Element mechanisch getrennt von dem lichtempfindlichen optischen Element montiert ist, kann es bei Beschädigung auch leicht ausgetauscht werden. Dies ist für die Reparaturfreundlichkeit des optisch-elektronischen Moduls förderlich.

Vorteilhafte und zweckmäßige Ausgestaltungen und Weiterbildungen der Erfindung sind in den Unteransprüchen gekennzeichnet.

### Zeichnungen

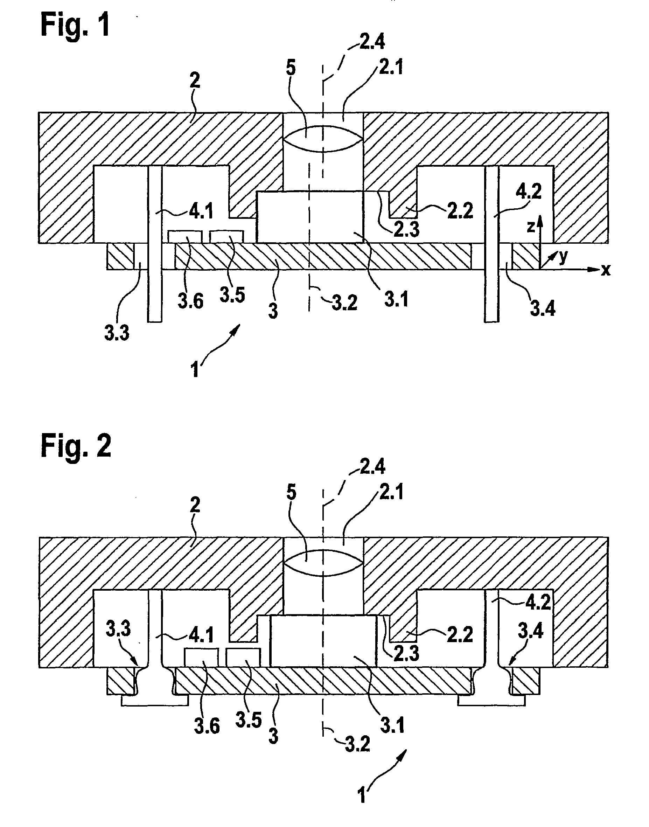

Die Erfindung wird nachstehend anhand der Zeichnung erläutert. Es zeigen Figur 1 eine schematische Darstellung des opto-elektronischen Moduls in einem Querschnitt in einer ersten Herstellungsphase und Figur 2 eine schematische Darstellung des opto-elektronischen Moduls in einem Querschnitt in einer zweiten Herstellungsphase.

### Beschreibung der Ausführungsbeispiele

Die Erfindung betrifft ein opto-elektronisches Modul mit einem Gehäuse und einem in dem Gehäuse angeordneten Trägerelement für optische und elektronische Bauelemente. Sowohl in dem Gehäuse als auch auf dem Trägerelement ist wenigstens ein optisches Bauelement angeordnet. Das auf dem Trägerelement angeordnete Banekment ist ein lichtempfindlicher sensor. Das Trägerelement ist durch Befestigungsmittel mit dem Gehäuse verbunden. Zweckmäßig werden die Befestigungsmittel nach der Montage des Trägerelements derart gestaucht, dass das Material der Befestigungsmittel in dem Trägerelement angeordnete Ausnehmungen ausfüllt und das Trägerelement dadurch festlegt.

Figur 1 zeigt eine schematische Darstellung des opto-elektronischen Moduls 1 in einem Querschnitt in einer ersten Herstellungsphase. Das opto-elektronische Modul 1 umfaßt ein Gehäuse 2 für die Aufnahme eines Trägerelements 3. In dem Gehäuse 2 ist ein optischer Kanal 2.1 angeordnet. In diesem optischen Kanal 2.1 ist ein optisches Element 5 befestigt, dessen optische Achse mit 2.4 bezeichnet ist. Der optische Kanal 2.1 mündet in eine Auflagefläche 2.3, die von einem in Axialrichtung vorspringenden Kragen 2.2 berandet ist. Weiterhin umfaßt das Gehäuse 2 Befestigungsmittel 4.1,4.2 für das Trägerelement 3. Die Befestigungsmittel 4.1,4.2 erstrecken sich im Wesentlichen parallel zu dem optischen Kanal 2.1. Das Trägerelement 3 trägt ein optisches Element 3.1 und eine Mehrzahl von elektronischen Elementen 3.5,3.6. Weiterhin verfügt das Trägerelement 3 über Ausnehmungen 3.3,3.4, deren lichte Weite den Durchmesser der Befestigungsmittel 4.1,4.2 übersteigt. Mit x, y, z ist ein kartesisches Koordinatensystem bezeichnet. Dabei liegen die x- und die y-Achsen in der Ebene des Trägerelements, während die z-Achse parallel zu der Flächennormalen des Trägerelements 3 und folglich auch parallel zu der optischen Achse des optischen Kanals 2.1 verläuft. Bei der Montage des Trägerelements 3 in dem Gehäuse 2 werden das Trägerelement 3 und das Gehäuse 2 zunächst derart ausgerichtet, daß die mit dem Gehäuse 2 verbundenen Befestigungsmittel 4.1,4.2 durch die Ausnehmungen 3.3, 3.4 in dem Trägerelement 3 hindurchgreifen. Dann wird das Trägerelement 3 solange in Axialrichtung parallel zu der z-Achse verschoben, bis eine Außenoberfläche des auf dem Trägerelement 3 angeordneten optischen Elements 3.1 auf der Auflagefläche 2.3 aufliegt. Durch den Anschlag des optischen Elements 3.1 an dieser Auflagefläche 2.3 ist somit seine Lage in z-Richtung im Wesentlichen fixiert. Da jedoch der Durchmesser der in dem Trägerelement 3 angeordneten Ausnehmungen 3.3, 3.4 den Durchmesser der Befestigungsmittel 4.1, 4.2 übersteigt, ist das Trägerelement 3 mitsamt dem optischen Element 3.1 noch in der x,y-Ebene verschiebbar und drehbar. Dies ist notwendig, um die optischen Elemente 3.1, 5 derart zueinander auszurichten, daß ihre optischen Achsen 2.4,3.2 miteinander fluchten. Nach dem exakten Ausrichten der optischen Elemente 3.1, 5 aufeinander wird das Trägerelement 3, beispielsweise durch Stauchen der Befestigungsmittel 4.1, 4.2, dauerhaft in seiner Lage fixiert. Dabei füllt das Material der gestauchten Befestigungsmittel 4.1, 4.2 vorteilhaft die Ausnehmungen 3.3, 3.4 aus. Dieser Montagezustand ist in Figur 2 dargestellt.

In einer weiteren Ausführungsvariante der Erfindung sind als Befestigungsmittel mit Gewinde ausgestattete Stehbolzen vorgesehen. Nach dem Aufschieben des Trägerelements 3 auf die Stehbolzen und der Ausrichtung der optischen Elemente 3.1, 5 aufeinander wird das Trägerelement 3 durch Beilagscheiben und Muttern mit den Stehbolzen verschraubt. In einer weiteren Form werden die Befestigungsmittel 4.1, 4.2 nach erfolgter Ausrichtung der optischen Elemente 3.1, 5 mit dem Trägerelement verklebt.

## Patentansprüche

1. Opto-elektronisches Modul (1) mit einem Gehäuse (2) und einem in dem Gehäuse (2) angeordnetem Trägerelement (3) für optische und elektronische Bauelemente, wobei sowohl in dem Gehäuse (29 als auch auf dem Trägerlement (3) wenigstens ein optisches Bauelement (3.1, 5) angeordnet ist, wobei das auf dem Trägerelement angeordnete Banekment ein lichtempfindlicher Sensorist, wobei die optischen Bauelemente zueinander justierbar sind, das Gehäuse (2) einen optischen Kanal (2.1) für die Aufnahme eines optischen Elements (5) umfasst, dass in einer Montagestufe das Trägerelement (3) in Bezug auf den in dem Gehäuse (2) angeordneten optischen Kanal (2.1) in Radialrichtung drehbar und/oder verschiebbar ist, und der optische Kanal (2.1) in eine dem Trägerelement (3) zugewandten Auflagefläche (2.3) mündet, die als Anschlag für das auf dem Trägerelement (3) angeordnetes optisches Bauelement (3.1) dient, wobei Gehäuse (2) und Trägerelement (3) durch Befestigungsmittel miteinander verbunden sind, wobei als Befestigungsmittel (4.1, 4.2) für das Trägerelement (3) stauchbare Stifte oder Stehbolzen mit Muttern vorgesehen sind, wobei das Trägerelement (3) die Befestigungsmittel (4.1, 4.2) umgreifende Ausnehmungen (3.3, 3.4) aufweist, wobei der Innendurchmesser der Ausnehmungen (3.3, 3.4) wesentlich größer als der Außendurchmesser der Befestigungsmittel (4.1, 4.2) ist, um eine Justierbewegung des Trägerelements (3) in Bezug auf das Gehäuse 82) zu ermöglichen.

2. Opto-elektronisches Modul (1) nach Anspruch 1, **dadurch gekennzeichnet, dass** die als stauchbare Stifte ausgebildeten Befestigungsmittel (4.1, 4.2) derart gestaucht sind, dass das Material der Befestigungsmittel (4.1, 4.2) in dem Trägerelement (3) angeordnete Ausnehmungen (3.3, 3.4) ausfüllt.

3. Opto-elektronisches Modul (1) nach einem der vorhergehenden Ansprüche, **dadurch gekennzeichnet, dass** die Auflagefläche (2.3) von einem in Axialrichtung vorspringenden Kragen (2.2) berandet ist, der das auf dem Trägerelement (3) angeordnete optische Bauelement (3.1) mit Abstand umgibt.

## Claims

1. Optoelectronic module (1) having a housing (2) and a carrier element (3), arranged in the housing (2), for optical and electronic components, at least one optical component (3.1, 5) being arranged both in the housing (2) and on the carrier element (3), the component arranged on the carrier element being a photo-sensitive sensor, it being possible to adjust the optical components relative to one another, the housing (2) comprising an optical channel (2.1) for holding an optical element (5), wherein in a mounting stage the carrier element (3) can be rotated and/or displaced in a radial direction with reference to the optical channel (2.1) arranged in the housing (2), and the optical channel (2.1) opening into a bearing surface (2.3) which faces the carrier element (3) and serves as a stop for the optical component (3.1) arranged on the carrier element (3), the housing (2) and carrier element (3) being interconnected by fastening means, in which compressible pins or studs with nuts are provided as fastening means (4.1, 4.2) for the carrier element (3), the carrier element (3) having cutouts (3.3, 3.4) surrounding the fastening means (4.1, 4.2), and the inside diameter of the cutouts (3.3, 3.4) being substantially larger than the outside diameter of the fastening means (4.1, 4.2) in order to enable an adjusting movement of the carrier element (3) with reference to the housing (2).

2. Optoelectronic module (1) according to Claim 1, **characterized in that** the fastening means (4.1, 4.2) designed as compressible pins are compressed in such a way that the material of the fastening means (4.1, 4.2) fills up cutouts (3.3, 3.4) arranged in the carrier element (3).

3. Optoelectronic module (1) according to one of the preceding claims, **characterized in that** the bearing surface (2.3) is edged by a collar (2.2) which projects in an axial direction and surrounds at a spacing the optical component (3.1) arranged on the carrier element (3).

## Revendications

1. Module optoélectronique (1) comprenant un boîtier (2) et un élément porteur (3) disposé dans le boîtier (2) pour des composants optiques et électroniques, au moins un composant optique (3.1, 5) étant disposé à la fois dans le boîtier (2) et aussi sur l'élément porteur (3), le composant disposé sur l'élément porteur étant un capteur sensible à la lumière, les composants optiques étant ajustables les uns par rapport aux autres, le boîtier (2) comprenant un canal optique (2.1) pour accueillir un élément optique (5), que dans une étape de montage, l'élément porteur (3) peut être tourné et/ou coulissé dans le sens radial par rapport au canal optique (2.1) disposé dans le boîtier (2), et le canal optique (2.1) débouche dans une surface d'appui (2.3) qui fait face à l'élément porteur (3), laquelle sert de butée pour le composant optique (3.1) disposé sur l'élément porteur (3), le boîtier (2) et l'élément porteur (3) étant reliés ensemble par des moyens de fixation, les moyens de fixation (4.1, 4.2) prévus pour l'élément porteur (3) étant des chevilles compressibles ou des goujons avec des écrous, l'élément porteur (3) présentant des évidements (3.3, 3.4) qui entourent les moyens de fixation (4.1, 4.2), le diamètre intérieur des évidements (3.3, 3.4) étant nettement plus grand que le diamètre extérieur des moyens de fixation (4.1, 4.2) afin de permettre un mouvement d'ajustement de l'élément porteur (3) par rapport au boîtier (2).

2. Module optoélectronique (1) selon la revendication 1, **caractérisé en ce que** les moyens de fixation (4.1, 4.2) réalisés sous la forme de chevilles compressibles sont comprimés de telle sorte que le matériau des moyens de fixation (4.1, 4.2) remplit les évidements (3.3, 3.4) disposés dans l'élément porteur (3).

3. Module optoélectronique (1) selon l'une des revendications précédentes, **caractérisé en ce que** la surface d'appui (2.3) est délimitée par une collerette (2.2) qui fait saillie dans le sens axial, laquelle entoure à un certain écart le composant optique (3.1) disposé sur l'élément porteur (3).
